# EUROPÄISCHE PATENTSCHRIFT

(11) **EP 0 502 386 B1**
(45) Veröffentlichungstag und Bekanntmachung des Hinweises auf die Patenterteilung: **23.04.1997**
(21) Anmeldenummer: 92102995.5
(22) Anmeldetag: 22.02.1992
(51) Int. Cl.: H04B 10/14, H04B 10/16

(54) **Optisch-Elektrisch-Wandler mit erweitertem Dynamikbereich**
Optical transducer with widened dynamic range
Transducteur opto-électrique à dynamique élargie

(30) Priorität: 04.03.1991 DE 4106778
(43) Veröffentlichungstag der Anmeldung: 09.09.1992
(73) Patentinhaber: Alcatel SEL Aktiengesellschaft, D-70435 Stuttgart (DE); ALCATEL N.V., NL-1077 XX Amsterdam (NL)
(72) Erfinder: Heidemann, Rolf, Dr., W-7146 Tamm (DE)
(74) Vertreter: Kugler, Hermann, Dipl.-Phys.

(56) Entgegenhaltungen:
- EP-A- 0 160 324
- EP-A- 0 395 277
- EP-B- 0 246 662
- EP-B- 0 262 728
- DE-C- 3 818 168
- JP-A- 3 025 985
- PATENT ABSTRACTS OF JAPAN vol. 8, no. 4 (E-220)(1441) 10. Januar 1984 & JP-A-58 171 137
- PATENT ABSTRACTS OF JAPAN vol. 9, no. 225 (E-342)(1984) 11. September 1985 & JP-A-60 084 034
- PATENT ABSTRACTS OF JAPAN (E-1057) 17. April 1991 & JP-A-30 25 985
- ELECTRONICS LETTERS, vol. 26, no. 19, 13 September 1990, SS. 1604-1605, "152 photons per bit detection at 622 Mbit/s to 2.5 Gbit/s using an erbium fibre preamplifier"
- PATENT ABSTRACTS OF JAPAN, vol. 8, no. 4 (E-220)(1441) 10. Januar 1984 & JP-A-58 171 137
- JOURNAL OF LIGHTWAVE TECHNOLOGY, vol. 9, no. 2, February 1991, pp. 261-265; "Temperature Dependence of the Gain in Erbium Doped Fibers"
- JOURNAL OF LIGHTWAVE TECHNOLOGY, vol. 9, no. 2, February 1991, pp. 271-283; "Modeling Erbium-Doped Fiber Amplifiers"
- JOURNAL OF LIGHTWAVE TECHNOLOGY, vol. 9, no. 2, February 1991, pp. 291-296; "Compact and highly efficient Fiber Amplifier Modules pumped by a 0.98 um Laser Diode"

## Beschreibung

Bei O/E-Wandlern für optische Empfänger ist es notwendig, daß der Pegel des elektrischen Ausgangssignals in einem bestimmten Bereich liegt. Der Pegel des elektrischen Ausgangssignals ist korreliert mit der Intensität des optischen Eingangssignals. Nun hängt aber letztere vom Einsatzgebiet des Wandlers ab und weist außerdem Temperatur-, Tageszeit-, Systemveränderungs- etc. abhängige Schwankungen auf. Dadurch entsteht die Notwendigkeit einer automatischen Pegeladaptierung im O/E-Wandler. Je weiter diese Pegeladaptierung geht, desto größer ist der sogenannte Dynamikbereich des O/E-Wandlers.

In herkömmlichen Systemen wird diese Pegeladaptierung rein im elektrischen Bereich vorgenommen. Dies hat sich als sehr kostspielig erwiesen, besonders wenn folgende Bedingungen in erhöhtem Maß erfüllt sein sollen:
- große Bandbreite,
- großer Dynamikbereich,
- gute Eingangsempfindlichkeit,
- Übersteuerungsfestigkeit.

Aus "Electronics Letters, 13th September 1990, Vol. 26, Nr. 19, Seiten 604-605" ist ein Wandler mit Merkmalen des Oberbegriffs von Anspruch 1 bekannt. Bei diesem ist dank eines faseroptischen Vorverstärkers die Eingangsempfindlichkeit gegenüber herkömmlichen Wandlern verbessert. Es sind dort aber keine Maßnahmen zur Vergrößerung des Dynamikbereichs genannt.

Zur Vergrößerung des Dynamikbereichs eines optischen Empfängers ist es aus EP-A-160 324 bekannt, vor dem eigentlichen optisch-elektrisch-Wandler eines optischen Empfängers ein steuerbares optisches Dämpfungsglied anzuordnen und dessen Dämpfungsfaktor in Abhängigkeit vom elektrischen Ausgangssignal der optischen Empfangseinrichtung zu regeln.

Aus Patent Abstracts of Japan, vol.9, no.225 (E 342) (1948), 11. September 1985 ist eine optische Übertragungsstrecke bekannt, die zum Ausgleich des auf der Übertragungsstrecke auftretenden Leistungsverlusts einen optischen Verstärker enthält. Dessen Verstärkungsfaktor ist regelbar und wird geregelt durch Übertragung und optischen Empfang von zusätzlich zum verstärkenden Nutzsignal übertragenem kontinuierlichen Licht einer zweiten Wellenlänge.

Aus "Journal of Lightwave Technology", Februar 1991, Vol. 9, Nr. 2, Seiten 271-288, sind aus der Seite 275 Verstärkungskennlinien eines faseroptischen Verstärkers in Abhängigkeit von der Pumpleistung des Pumplasers bekannt. Diese Kennlinien weisen auch einen Verstärkungsbereich von weniger als 0 dB auf, wenn die Pumpleistung unterhalb eines Grenzwertes absinkt. Jedoch findet der Fachmann in diesem Dokument keinen Hinweis darauf, einen solchen faseroptischen Verstärker auch als Dämpfer zu verwenden.

Es ist die Aufgabe der Erfindung, einen O/E-Wandler zu schaffen, der die erwähnten Bedingungen in sehr hohem Maß und bei relativ geringem Kostenaufwand erfüllt.

Die Aufgabe wird wie im Patentanspruch 1 angegeben gelöst. Weiterbildungen ergeben sich aus den Unteransprüchen. Die in Anspruch 1 vorgeschlagene Ausführung der Erfindung erweist sich als besonders einfach, da die ohnehin vorhandene Pumplichtquelle, die ja den Verstärkungsfaktor bestimmt, sehr leicht durch ein elektrisches Signal gesteuert werden kann. Gleichzeitig ist der Kostenaufwand relativ gering, wenn man davon ausgeht, daß geeignete Pumplichtquellen bald zu günstigen Preisen erhältlich sein werden.

Bei der erfindungsgemäßen Lösung sind die gestellten Bedingungen in folgendem Maß erfüllt:
- Bandbreite im Gbit/s-Bereich,
- Dynamik von ca. 80 dB,
- Eingangsempfindlichkeit von z.B.-32 dBm bei 5 Gbit/s,
- Übersteuerungsfestigkeit garantiert.

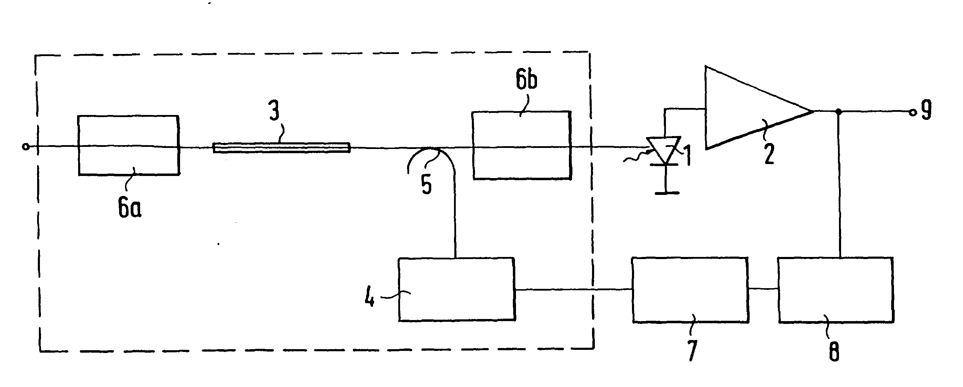

Ein Ausführungsbeispiel der Erfindung ist in der einzigen Zeichnung dargestellt. Es entspricht einer Ausführung mit faseroptischem Verstärker und Pumplichtquelle.

Die Zeichnung zeigt den eigentlichen O/E-Wandler mit einer typischen Photodiode 1 und einem typischen elektrischen Vorverstärker 2, den optischen Vorverstärker bestehend aus einer Erbium dotierten Faser (EDF) 3, einer Pumplichtquelle 4, einem Pumpkoppler 5 und zwei Pumpsperrfiltern 6a und 6b, weiters einem automatischen Regler ("Automatic Gain Control"-Element) 7 und einem Pegeldetektor 8.

Der Pegeldetektor ermittelt den jeweils momentanen Mittelwert des elektrischen Ausgangssignals 9 und übergibt diesen dem automatischen Regler. Der automatische Regler leitet daraus nach einer vorgegebenen Regelkennlinie die Steuerspannung für die Pumplichtquelle ab.

Der Pegeldetektor kann entweder das elektrische Signal von vor oder nach dem elektrischen Vorverstärker 2 verwenden, oder aber auch eine weiterverarbeitete Form dieses elektrischen Signals.

Demnach wird erfindungsgemäß die Pumpleistung über den automatischen Regler in Abhängigkeit vom elektrischen Signal gesteuert. Die Pumpleistung ihrerseits bestimmt den Verstärkungsfaktor der EDF. Dabei ist zu bemerken, daß der Verstärkungsfaktor auch kleiner als 1 werden kann, was einer Dämpfung entsprechen würde. Der automatische Regler kann z.B. mit einem einfachen Operationsverstärker, der Pegeldetektor z.B. mit einer Diode realisiert werden. Die Zeitkonstante der automatischen Reglung kann so gewählt werden, daß die Schnelligkeit, mit welcher die Pumpleistung und damit der Verstärkungsfaktor nachgeregelt werden, optimal ist.

Es wäre auch als erfindungsgemäß zu betrachten, wenn die Pumpleistung erst nach Austritt aus der Pumplichtquelle geregelt würde. Man kann dabei z. B. an einen optischen Modulator denken, der die Intensität des Pumplichts in Abhängigkeit vom elektrischen Signal moduliert. (Es sei hier vermerkt, daß in dieser Schrift unter Pumplichtquelle sowohl das eigentliche lichterzeugende Element, als auch der dazu notwendige Treiber zu verstehen ist.)

Der Einsatz eines faseroptischen Verstärkers viel mehr als eines anderen optischen Verstärkers erscheint in Anbetracht der Rausch- und Eingangsreflexionseigenschaften als vorteilhaft.

Diese Art von Empfängereingangsstufe ist übersteuerungsfest, da der. optische Vorverstärker auch bezüglich seiner Ausgangsleistung eine Sättigungscharakteristik aufweist, wie sie in ähnlicher Weise jedem Verstärker eigen ist.

## Patentansprüche

1. Optisch-Elektrisch-Wandler mit automatischer Pegeladaptierung, bei dem das eingehende optische Signal vor Eintritt in den eigentlichen Wandler einen faseroptischen Verstärker (3,4,5) mit einer Pumplichtquelle (4) durchläuft,
und bei dem Mittel (7,8) vorhanden sind, um in Abhängigkeit vom elektrischen Ausgangssignal die Pumplichtquelle zu steuern,
wobei die Pumplichtquelle in einem Bereich gesteuert wird, bei dem der Verstärkungsfaktor des faseroptischen Verstärkers Werte von sowohl größer oder gleich 1, was einer Verstärkung entspricht, oder auch kleiner als 1, was einer Dämpfung entspricht, annehmen kann.

2. Wandler nach Anspruch 1, dadurch gekennzeichnet, daß das Pumplicht signalgegenläufig in den faseroptischen Verstärker eingekoppelt wird.

3. Wandler nach Anspruch 1, dadurch gekennzeichnet, daß dem optischen Verstärker Pumplichtsperrfilter vor- und/oder nachgeschaltet sind.

4. Wandler nach einem der vorstehenden Ansprüche, dadurch gekennzeichnet, daß zum Regeln ein beliebiges Signal verwendet wird, das mit dem elektrischen Ausgangssignal korreliert ist.

## Claims

1. An optical-to-electrical transducer with automatic level adaptation
wherein the incoming optical signal passes through a fiber-optic amplifier (3, 4, 5) comprising a pump source (4) before entering the transducer proper, and wherein means (7, 8) are provided for controlling the pump source,
the pump source being controlled within a range in which the gain of the fiber-optic amplifier can assume values greater than unity, which corresponds to amplification, or less than unity, which corresponds to attenuation.

2. A transducer as claimed in claim 1, characterized in that the pump light is coupled into the fiber-optic amplifier in a direction opposite to the propagation direction of the optical signal.

3. A transducer as claimed in claim 1, characterized in that the optical amplifier is preceded and/or followed by pump-light-absorbing filters.

4. A transducer as claimed in any one of the preceding claims, characterized in that to control the pump source, use is made of an arbitrary signal correlated with the electric output signal.

## Revendications

1. Transducteur opto-électrique comprenant une adaptation automatique de niveau, dans lequel le signal optique entrant traverse, avant d'entrer dans le transducteur proprement dit, un amplificateur à fibre optique (3, 4, 5) comportant une source de lumière de pompage (4), et dans lequel des moyens (7, 8) sont présents pour commander la source de lumière de pompage en fonction du signal de sortie électrique, la source de lumière de pompage étant commandée dans une gamme dans laquelle le facteur d'amplification de l'amplificateur à fibre optique peut accepter des valeurs supérieures ou égales à 1, ce qui correspond à une amplification, ou inférieures à 1, ce qui correspond à une atténuation.

2. Transducteur suivant la revendication 1, caractérisé en ce que la lumière de pompage est couplée dans l'amplificateur à fibre optique en sens contraire du signal.

3. Transducteur suivant la revendication 1, caractérisé en ce qu'un filtre d'arrêt de la lumière de pompage et monté en amont et/ou en aval de l'amplificateur optique.

4. Transducteur suivant l'une des revendications précédentes. caractérisé en ce qu'un signal quelconque, corrélé au signal de sortie électrique, est utilisé pour le réglage.
